# EUROPEAN PATENT APPLICATION

(11) **EP 4 632 220 A1**
(43) Date of publication of application: **15.10.2025**
(21) Application number: 25165975.1
(22) Date of filing: 25.03.2025
(51) Int. Cl.: F03D 7/02, F03D 17/00

(54) **CONTROLLER, PROCESSING CIRCUIT, METHOD, AND NON-TRANSITORY COMPUTER-READABLE MEDIUM FOR CONTROLLING WIND POWER GENERATION DEVICE**

(30) Priority: 09.04.2024 JP 2024062851
(71) Applicant: Nabtesco Corporation, Tokyo 102-0093 (JP)
(72) Inventor: Nohara, Osamu, Tokyo 102-0093 (JP)
(74) Representative: Grünecker Patent- und Rechtsanwälte PartG mbB

(57) **Abstract**

A controller (600) for controlling a wind power generation device (100) including a tower (110) and a nacelle (160) includes: a processing circuit (501) configured to control a motor (60) for rotating the nacelle relative to the tower; and a torque information sensor (21) for sensing information about a torque acting from the nacelle to a gear mechanism (200), the gear mechanism connecting the tower and the nacelle so as to be capable of relative rotation. The processing circuit drives the motor based on a sensing value of the torque information sensor.

## Description

### TECHNICAL FIELD

The present disclosure relates to a controller, processing circuit, method, and non-transitory computer-readable medium for controlling a wind power generation device.

### BACKGROUND

The wind power generation device disclosed in Japanese Patent Application Publication No. 2021-93900 ("the '900 Publication") includes a tower, a nacelle, a hub, a plurality of blades, and an anemoscope. The nacelle is connected to the top end of the tower. The nacelle can rotate about the yaw axis. The yaw axis coincides with the central axis of the tower. The nacelle houses a power generator. The hub is connected to an input shaft of the power generator. The hub can rotate about a roll axis orthogonal to the yaw axis. The plurality of blades are connected to the hub. The plurality of blades rotate integrally with the hub. The anemoscope is installed on the nacelle.

In a wind power generation device as disclosed in the '900 Publication, the efficiency of power generation is high when the direction of the wind relative to the blades coincides substantially with the extending direction of the roll axis. Thus, the rotational position of the nacelle around the yaw axis should preferably be adjusted so that the direction of the wind relative to the blades coincides with the extending direction of the roll axis. In adjusting the rotational position of the nacelle in this manner, measurement results of the anemoscope may be used. However, the anemoscope is located downwind of the blades. Therefore, the wind reaching the anemoscope may have been turbulent or redirected as it passes the blades. Therefore, the measurement results of the anemoscope do not always accurately reflect the actual direction of the wind received by the blades.

### SUMMARY

In one aspect, provided is a controller for controlling a wind power generation device. The wind power generation device includes a tower and a nacelle. The controller comprises: a processing circuit configured to control a motor for rotating the nacelle relative to the tower; and a torque information sensor for sensing information about a torque acting from the nacelle to a gear mechanism, the gear mechanism connecting the tower and the nacelle so as to be capable of relative rotation, wherein the processing circuit is configured to drive the motor based on a sensing value of the torque information sensor. In one embodiment, the processing circuit may be further configured to: obtain, based on the sensing value of the torque information sensor, a parameter positively correlated to the torque; if the parameter is greater than or equal to a first threshold value, start driving the motor to rotate the nacelle relative to the tower; and if the parameter is less than or equal to a second threshold value that is less than the first threshold value, stop driving the motor.

In one embodiment, the information about the torque may be strain in a bolt for connecting the nacelle to the gear mechanism. In one embodiment, the torque information sensor may be a first torque information sensor among a plurality of torque information sensors, the motor may be a first motor among a plurality of motors, and the bolt may be a first bolt among a plurality of bolts, the plurality of motors may be configured such that, when the nacelle is connected to the gear mechanism, the plurality of motors are arranged in a circumferential direction around a central axis of rotation of the nacelle relative to the tower, and each of the plurality of motors is fixed to the nacelle with respective one of the plurality of bolts, each of the plurality of torque information sensors may be provided for respective one of the plurality of bolts, and the processing circuit may be configured to obtain the parameter based on a value statistically calculated from sensing values of the plurality of torque information sensors.

In one embodiment, the controller may comprise a speed sensor for sensing a speed of wind passing the nacelle, wherein in a plane perpendicular to a central axis of rotation of the nacelle relative to the tower, a misalignment angle is defined as an acute angle formed by a first direction and a second direction, the first direction being a direction along a central axis of rotation of a blade connected to the nacelle, the second direction being a direction of wind relative to the blade, wherein the processing circuit may include a memory that stores correspondence information expressing correspondence among the information about the torque, the speed of wind, and the misalignment angle, and wherein the processing circuit may be configured to obtain the misalignment angle as the parameter based on the sensing value of the torque information sensor, a sensing value of the speed sensor, and the correspondence information.

In one embodiment, the controller may comprise a speed sensor for sensing a speed of wind passing the nacelle, wherein the processing circuit may be further configured to: alternate braking of rotation of the nacelle relative to the tower with driving of the motor, the braking being performed by driving at least one of an electromagnetic brake and a friction brake, the electromagnetic brake being configured to use an electromagnetic force to apply a braking force to an output shaft of the motor, the friction brake being configured to use a fluid pressure to apply a braking force to rotation of the nacelle relative to the tower; if a sensing value of the speed sensor is less than or equal to a predetermined setting value, drive only the electromagnetic brake; and if the sensing value of the speed sensor is greater than the setting value, drive both the electromagnetic brake and the friction brake.

In another aspect, provided is a processing circuit for controlling a wind power generation device. The wind power generation device includes a tower and a nacelle, and the processing circuit is configured to: obtain information about a torque acting from the nacelle to a gear mechanism, the gear mechanism connecting the tower and the nacelle so as to be capable of relative rotation; obtain, based on the information, a parameter positively correlated to the torque; if the parameter is greater than or equal to a first threshold value, start driving a motor to rotate the nacelle relative to the tower; and if the parameter is less than or equal to a second threshold value that is less than the first threshold value, stop driving the motor.

In still another aspect, provided is a method for controlling a wind power generation device. The wind power generation device includes a tower and a nacelle, and the method comprises: obtaining, by a processing circuit, information about a torque acting from the nacelle to a gear mechanism, the gear mechanism connecting the tower and the nacelle so as to be capable of relative rotation; obtaining, by the processing circuit, based on the information, a parameter positively correlated to the torque; if the parameter is greater than or equal to a first threshold value, starting, by the processing circuit, driving a motor to rotate the nacelle relative to the tower; and if the parameter is less than or equal to a second threshold value that is less than the first threshold value, stopping, by the processing circuit, driving the motor.

In yet another aspect, provided is a non-transitory computer-readable medium storing a program for controlling a wind power generation device. The wind power generation device includes a tower and a nacelle, and the program is configured to be executed by a processing circuit to cause the processing circuit to: obtain information about a torque acting from the nacelle to a gear mechanism, the gear mechanism connecting the tower and the nacelle so as to be capable of relative rotation; obtain, based on the information, a parameter positively correlated to the torque; if the parameter is greater than or equal to a first threshold value, start driving a motor to rotate the nacelle relative to the tower; and if the parameter is less than or equal to a second threshold value that is less than the first threshold value, stop driving the motor.

### BRIEF DESCRIPTION OF THE DRAWINGS

Fig. 1 is a perspective view showing an external appearance of a wind power generation device.
Fig. 2 is a top view schematically showing the wind power generation device.
Fig. 3 is a sectional view schematically showing a part of the wind power generation device.
Fig. 4 is a sectional view schematically showing a part of the wind power generation device.
Fig. 5 schematically shows the configuration of a controller.
Fig. 6 is a graph showing the amount of power generated by a power generator in relation to the passing wind speed.
Fig. 7 is a flowchart showing the steps of braking control.
Fig. 8 is a flowchart showing the steps of driving control.
Fig. 9 is a graph showing an example of the correspondence between the load torque and the bolt strain.
Fig. 10 is a graph showing an example of the correspondence among the misalignment angle, the bolt strain, and the passing wind speed.

### DESCRIPTION OF THE PREFERRED EMBODIMENTS

A description will be hereinafter given of one embodiment of a controller, processing circuit, method, and non-transitory computer-readable medium for controlling a wind power generation device, with reference to the drawings.

### <Overall Configuration>

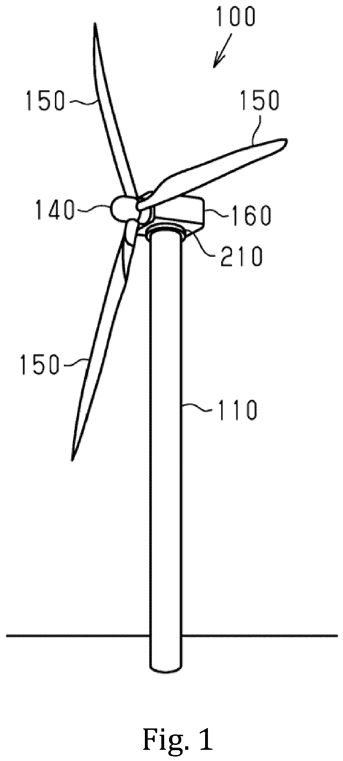

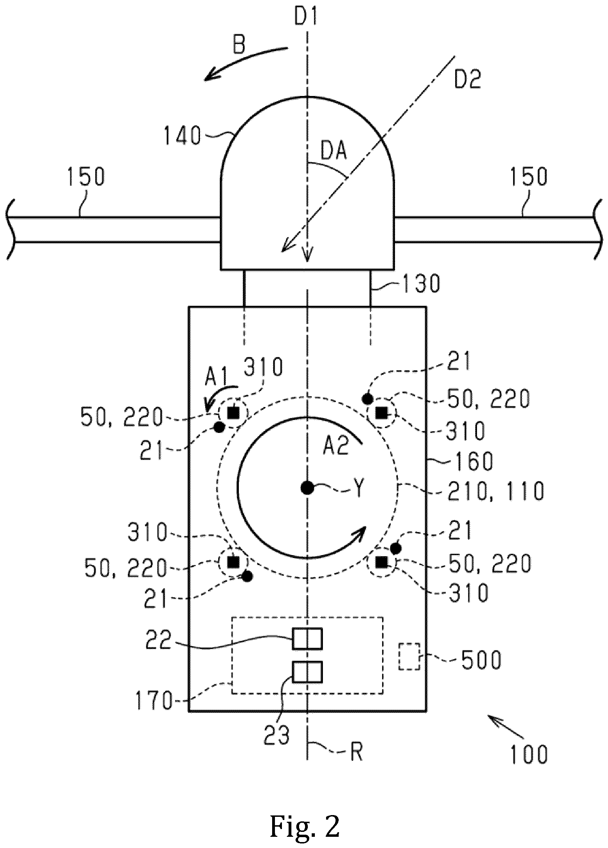

As shown in Fig. 1, a wind power generation device 100 includes a tower 110, a ring gear 210, and a nacelle 160. As shown in Fig. 2, the wind power generation device 100 also includes a transmission shaft 130, a hub 140, and a plurality of blades 150.

As shown in Fig. 1, the tower 110 is shaped like a circular column. The tower 110 extends upward from the land or the sea. The interior of the tower 110 is hollow. The tower 110 contains power cables for power transmission. The central axis of the tower 110 is hereinafter referred to as the yaw axis Y. The yaw axis Y extends upward.

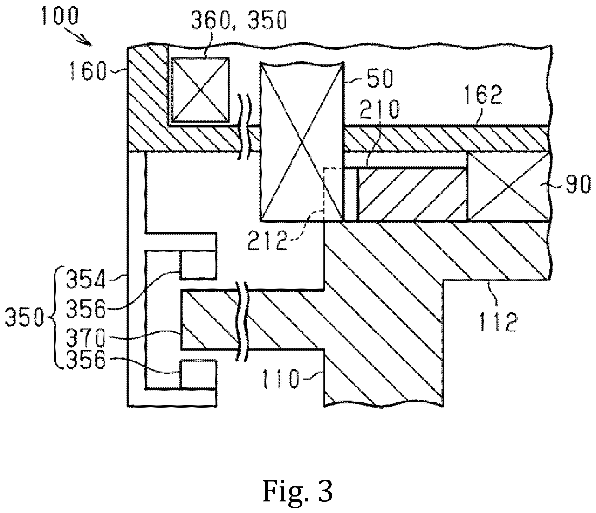

The ring gear 210 is located above the tower 110. In Fig. 1, the ring gear 210 is exaggeratedly shown in a larger size. As shown in Fig. 2, the ring gear 210 has an annular shape. The central axis of the ring gear 210 substantially coincides with the yaw axis Y. As shown in Fig. 3, a plurality of teeth 212 are located on the outer circumference of the ring gear 210. The plurality of teeth 212 are arranged at equal intervals in the circumferential direction around the central axis of the ring gear 210. The outer diameter of the ring gear 210 is substantially equal to the outer diameter of the top wall 112 of the tower 110. The ring gear 210 is fixed to the top wall 112 of the tower 110.

As shown in Fig. 1, the nacelle 160 is located above the tower 110 and the ring gear 210. The nacelle 160 is contoured like a rectangular parallelepiped. As shown in Fig. 2, when the wind power generation device 100 is viewed in plan from above, the outer edge dimensions of the nacelle 160 are larger than the outer edge dimensions of the tower 110 and the ring gear 210. In this plan view, the ring gear 210 is located within the region enclosed by the outer edge of the nacelle 160. The nacelle 160 is hollow. The nacelle houses a power generator 170 and other components. The arrangement, shape, and size of each component shown in Fig. 2, including the power generator 170, are for convenience to facilitate understanding and do not necessarily correspond to actual ones.

As shown in Fig. 3, a part of bottom wall 162 of the nacelle 160 faces the ring gear 210. The portion of the bottom wall 162 of the nacelle 160 that is inside the ring gear 210 in the radial direction around the yaw axis Y faces the top wall 112 of the tower 110. A support mechanism 90 is located between the bottom wall 162 of the nacelle 160 and the top wall 112 of the tower 110. The support mechanism 90 includes a bearing and other components. The bottom wall 162 of the nacelle 160 is supported by the support mechanism 90. With the support of the support mechanism 90, the nacelle 160 is rotatable relative to the tower 110 and the ring gear 210 about the yaw axis Y as the central axis of rotation.

As shown in Fig. 2, the transmission shaft 130 extends from the inside to the outside of the nacelle 160. The central axis of the transmission shaft 130 is orthogonal to the yaw axis Y. The central axis of the transmission shaft 130 is hereinafter referred to as the roll axis R. The transmission shaft 130 can rotate about the roll axis R as the central axis of rotation. The portion of the transmission shaft 130 that is located inside the nacelle 160 is connected to the power generator 170 via a speed increaser not shown. The power generator 170 converts the rotation transmitted from the speed increaser into electrical power.

The hub 140 is connected to the portion of the transmission shaft 130 that is located outside the nacelle 160. The hub 140 rotates integrally with the transmission shaft 130. As shown in Fig. 1, the plurality of blades 150 are connected to the hub 140. Thus, the plurality of blades 150 are connected to the nacelle 160 via the hub 140. There are, for example, three blades 150. The blades 150 extend outward from the hub 140 in the radial direction around the roll axis R. The blades 150 are arranged at equal intervals in the circumferential direction around the roll axis R. The blades 150 can rotate together with the hub 140 around the roll axis R as the central axis of rotation.

### <Drive Units>

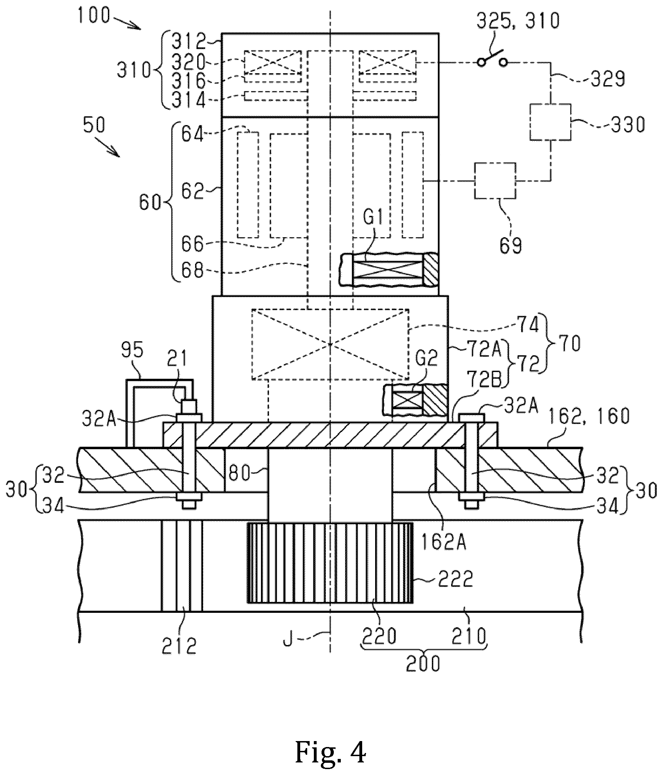

As shown in Fig. 2, the wind power generation device 100 includes four drive units 50. The four drive units 50 are located outside the ring gear 210 in the radial direction around the yaw axis Y. The four drive units 50 are arranged at equal intervals in the circumferential direction around the yaw axis Y. As will be described later, the four drive units 50 are fixed to the nacelle 160. Each of the drive units 50 is configured and fixed to the nacelle 160 in the same manner. Therefore, one of the drive units 50 shown in Fig. 4 is detailed as an example. As shown in Fig. 4, the wind power generation device 100 is equipped with a battery 330, and an inverter 69 for each of the drive units 50, as components related to the drive units 50.

As shown in Fig. 4, the drive unit 50 includes a motor 60, a speed reducer 70, and a drive shaft 80. The motor 60 is an electric motor. The motor 60 includes a first case 62, a stator 64, a rotor 66, and an output shaft 68. The first case 62 is located inside the nacelle 160. The first case 62 is located close to the bottom wall 162 of the nacelle 160. The first case 62 has a cylindrical shape. The central axis J of the first case 62 is substantially parallel to the yaw axis Y. The stator 64 is located inside the first case 62. The stator 64 is fixed to the first case 62. The stator 64 has a cylindrical shape. Although not shown in the drawing, the stator 64 is wound with a coil. The coil is electrically connected to the battery 330 via the inverter 69. The rotor 66 is located inside the stator 64. The rotor 66 can rotate relative to the stator 64. The output shaft 68 is fixed to the rotor 66. The output shaft 68 rotates integrally with the rotor 66. The central axis J of the output shaft 68 substantially coincides with the central axis J of the first case 62. In this embodiment, axes that coincide with the central axis J of the first case 62 are denoted by the unified sign J. The output shaft 68 rotates about its own central axis J as the center of rotation. The most part of the output shaft 68 is located inside the first case 62. Both ends of the output shaft 68 protrude to the outside of the first case 62. A bearing G1 is interposed between the portion of the output shaft 68 that is located close to the end of the first case 62 in the direction along the central axis J and the inner surface of the first case 62. The bearing G1 rotatably supports the output shaft 68.

The speed reducer 70 is located between the first case 62 and the bottom wall 162 of the nacelle 160. The speed reducer 70 includes a second case 72 and a speed reduction mechanism 74. The second case 72 includes a case body 72A and a flange 72B. The case body 72A has a cylindrical shape. The central axis J of the case body 72A substantially coincides with the central axis J of the first case 62. The case body 72A is fixed to the first case 62. The flange 72B is located at the lower end of the second case 72. The flange 72B protrudes from the outer circumferential surface of the second case 72. The flange 72B extends over the entire circumference of the case body 72A. The bottom surface of the flange 72B faces the bottom wall 162 of the nacelle 160. The flange 72B is fixed to the bottom wall 162 of the nacelle 160. This fixing structure will be described later.

The speed reduction mechanism 74 is located inside the case body 72A. The speed reduction mechanism 74 is connected to the output shaft 68 of the motor 60. The speed reduction mechanism 74 receives the torque of the output shaft 68 of the motor 60. The speed reduction mechanism 74 multiplies the torque of the output shaft 68 of the motor 60 with a predetermined ratio and outputs the resulting torque to the drive shaft 80. The speed reduction mechanism 74 may be of, for example, an eccentric oscillation gear type or planetary gear type. The speed reduction mechanism 74 can be of any type as long as it is capable of multiplying and outputting the torque from the motor 60.

The drive shaft 80 is connected to the speed reduction mechanism 74. The drive shaft 80 protrudes from the inside to the outside of the case body 72A. The central axis J of the drive shaft 80 substantially coincides with the central axis J of the output shaft 68 of the motor 60. A bearing G2 is interposed between the portion of the drive shaft 80 that is located inside the case body 72A and the inner surface of the case body 72A. The bearing G2 rotatably supports the drive shaft 80. The drive shaft 80 rotates about its own central axis J as the center of rotation. The portion of the drive shaft 80 that protrudes to the outside of the case body 72A penetrates a through hole 162A in the bottom wall 162 of the nacelle 160. The end of the portion of the drive shaft 80 that protrudes to the outside of the case body 72A is located within the region of the ring gear 210 in the direction along the central axis J of the drive shaft 80.

A description is now given of the fixing structure of the second case 72 to the nacelle 160. The second case 72 is fixed to the bottom wall 162 of the nacelle 160 by a plurality of fasteners 30. Fig. 4 shows two of the plurality of fasteners 30 as representatives. The plurality of fasteners 30 are located on the flange 72B. The plurality of fasteners 30 are arranged at equal intervals in the circumferential direction around the central axis J of the case body 72A. Each fastener 30 has the same configuration and function. Therefore, one of the fasteners 30 is detailed below as an example.

The fastener 30 is constituted by a bolt 32 and a nut 34. The bolt 32 penetrates the flange 72B and the bottom wall 162 of the nacelle 160. The head 32A of the bolt 32 is located on the top surface of the flange 72B. The end of the bolt 32 opposite to the head 32A protrudes downward from the bottom wall 162 of the nacelle 160. The nut 34 is secured to the end of the bolt 32 opposite to the head 32A. As a result, the flange 72B is fixed to the bottom wall 162 of the nacelle 160.

As described above, the second case 72 is fixed to the first case 62. In other words, the second case 72 is integrated with the first case 62. Since the second case 72 is fixed to the nacelle 160 by the bolts 32, the motor 60 including the first case 62 is also fixed to the nacelle 160 by the bolts 32. The bolts 32 that fix the motor 60 to the nacelle 160 are provided for each motor 60 and thus for each drive unit 50.

### <Pinion Gear>

As shown in Fig. 2, the wind power generation device 100 includes a plurality of pinion gears 220. Each drive unit 50 is provided with a pinion gear 220. Each pinion gear 220 is mounted to the drive unit 50 in the same manner. Therefore, one of the pinion gears 220 shown in Fig. 4 is detailed as an example.

As shown in Fig. 4, the pinion gear 220 is mounted to the end of the portion of the drive shaft 80 that protrudes to the outside of the case body 72A. The pinion gear 220 has a cylindrical shape. The drive shaft 80 is inserted into the center hole of the pinion gear 220. The central axis J of the pinion gear 220 substantially coincides with the central axis J of the drive shaft 80. The pinion gear 220 rotates together with the drive shaft 80. A plurality of teeth 222 are located on the outer circumference of the pinion gear 220. The plurality of teeth 222 are arranged at equal intervals in the circumferential direction around the central axis J of the pinion gear 220. The outer circumference of the pinion gear 220 faces the outer circumference of the ring gear 210. The teeth 222 of the pinion gear 220 are engaged with the teeth 212 of the ring gear 210. Fig. 4 shows only a part of the plurality of teeth 212 of the ring gear 210. The pinion gear 220 and the ring gear 210 constitute a gear mechanism 200 that connects the tower 110 and the nacelle 160 so as to be capable of relative rotation.

A description is now given of the flow of power transmission related to the rotation of the nacelle 160 relative to the tower 110. The motor 60 can output a driving force for rotating the nacelle 160 relative to the tower 110. Upon rotation of the output shaft 68 of the motor 60, the drive shaft 80 rotates together with the output shaft 68. The pinion gear 220 rotates resultantly, as shown by the arrow A1 in Fig. 2. At this time, the pinion gear 220 rotates while revolving around the ring gear 210. As the pinion gear 220 revolves, the nacelle 160 rotates relative to the tower 110 around the yaw axis Y as the center of rotation, as shown by the arrow A2 in Fig. 2. In other words, the yaw axis Y is the central axis of rotation of the nacelle 160.

### <Electromagnetic Brake>

As shown in Fig. 2, the wind power generation device 100 includes a plurality of electromagnetic brakes 310. The electromagnetic brakes 310 are electromagnetic brakes that use electromagnetic force. Each drive unit 50 is provided with an electromagnetic brake 310. Each electromagnetic brake 310 has the same configuration. Therefore, one of the electromagnetic brakes 310 shown in Fig. 4 is detailed as an example.

As shown in Fig. 4, the electromagnetic brake 310 is located on the opposite side of the motor 60 to the speed reducer 70. The electromagnetic brake 310 includes a third case 312, a contact plate 314, a movable plate 316, an electromagnet 320, and a relay 325. The third case 312 has a cylindrical shape. The central axis J of the third case 312 substantially coincides with the central axis J of the first case 62 of the motor 60. The upper end of the third case 312, located on one side in the direction along the central axis J, is closed. The lower end of the third case 312 is fixed to the first case 62. A part of the output shaft 68 of the motor 60 is located inside the third case 312.

The contact plate 314, the movable plate 316, and the electromagnet 320 are located inside the third case 312. The contact plate 314 is located close to the first case 62 in the direction along the central axis J of the third case 312. The contact plate 314 has a disc-like shape. The middle part of the contact plate 314 is penetrated by the output shaft 68 of the motor 60. The contact plate 314 rotates integrally with the output shaft 68.

The electromagnet 320 is located on the opposite side of the contact plate 314 to the first case 62. Although not shown in detail, the electromagnet 320 includes an electromagnet body, a coil, and a spring. The electromagnet body is fixed to the third case 312. The coil and the spring are built into the electromagnet body.

The movable plate 316 is located between the contact plate 314 and the electromagnet 320. The movable plate 316 has a disc-like shape. The movable plate 316 has a hole formed in the middle thereof. The diameter of this hole is larger than the diameter of the output shaft 68 of the motor 60. This hole is penetrated by the output shaft 68. The movable plate 316 is movable in the direction along the central axis J of the output shaft 68.

The relay 325 is located in the middle of the power line 329 that connects the coil of the electromagnet 320 and the battery 330. In response to the relay 325 being turned on or off, the power supplied to the coil of the electromagnet 320 is switched on or off. The electromagnet 320 changes the position of the movable plate 316 depending on whether or not the power is supplied to the coil. When the power is not supplied to the coil, the electromagnet 320 moves the movable plate 316 away from the electromagnet body by the elastic force of the spring. At this time, the spring pushes the movable plate 316 against the contact plate 314. Accordingly, a braking force is applied to the contact plate 314 and thus to the output shaft 68 of the motor 60 to brake the rotation of the output shaft 68. In other words, the movable plate 316 applies a braking force to the output shaft 68. On the other hand, when the power is supplied to the coil, the electromagnet 320 pulls the movable plate 316 toward the electromagnet body against the elastic force of the spring. Accordingly, the movable plate 316 is positioned away from the contact plate 314. The braking force on the contact plate 314 and the output shaft 68 of the motor 60 is released.

### <Friction Brake>

As shown in Fig. 3, the wind power generation device 100 includes a hydraulic friction brake 350. The friction brake 350 is what is called a disc brake. The friction brake 350 includes an extension wall 370, a connecting member 354, a pair of friction members 356, and a hydraulic pressure supply mechanism 360.

The extension wall 370 protrudes from the outer surface of the tower 110. The extension wall 370 is located close to the top wall 112 of the tower 110. The extension wall 370 extends over the entire circumference of the tower 110 around the yaw axis Y.

The connecting member 354 is fixed to the bottom wall 162 of the nacelle 160. The connecting member 354 holds the pair of friction members 356. The pair of friction members 356 are located above and below the extension wall 370. The pair of friction members 356 receive a hydraulic pressure supplied from the hydraulic pressure supply mechanism 360. The hydraulic pressure supply mechanism 360 includes a pump, valves to switch the oil path, and other components. The pair of friction members 356 change positions depending on whether or not the hydraulic pressure is supplied. The pair of friction members 356 move closer to each other when supplied with the hydraulic pressure. The pair of friction members 356 thus sandwich the extension wall 370. The frictional force acting between the pair of friction members 356 and the extension wall 370 serves as the braking force that brakes the rotation of the nacelle 160 relative to the tower 110. In other words, the friction brake 350 applies a braking force to the tower 110 and the nacelle 160 to brake their rotation relative to each other. It can also be said that the friction brake 350 applies a braking force for braking the rotation of the nacelle 160 relative to the tower 110. The pair of friction members 356 move away from each other when not supplied with the hydraulic pressure. Accordingly, the pair of friction members 356 are positioned away from the extension wall 370. The braking force related to the rotation of the nacelle 160 relative to the tower 110 is thus released.

### <Sensors>

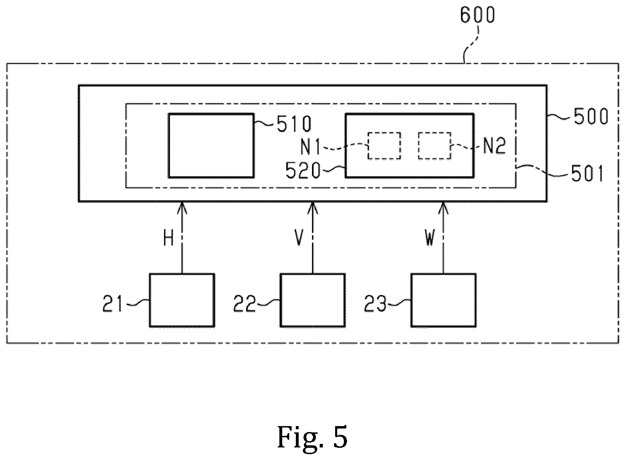

As shown in Figs. 2 and 5, the wind power generation device 100 includes a plurality of strain sensors 21. Fig. 5 shows one of the plurality of strain sensors 21 as a representative. The strain sensor 21 is a torque information sensor that detects strain as information related to torque. As shown in Fig. 2, each drive unit 50 is provided with a strain sensor 21. In other words, each motor 60 is provided with a strain sensor 21. Each strain sensor 21 has the same arrangement and function. Therefore, one of the strain sensors 21 shown in Fig. 4 is detailed as an example.

Any one of a plurality of bolts 32 that fix one drive unit 50 to the nacelle 160 is referred to as a target bolt. As shown in Fig. 4, the strain sensor 21 is located near the target bolt. Fig. 4, shows that the strain sensor 21 is on the head 32A of bolt 32. The strain sensor 21 is fixed to the bottom wall 162 of the nacelle 160 by a holder 95. The strain sensor 21 detects the strain H in the target bolt. As shown in Fig. 5, the strain sensor 21 repeatedly outputs its own sensing values to the control unit 500 described later.

The target bolt can be described as follows. As shown in Fig. 4, the target bolt serves to connect the drive unit 50 to the nacelle 160. As mentioned above, the pinion gear 220 is connected to the drive shaft 80 of the drive unit 50. Thus, the target bolt connects the drive unit 50, and thus the pinion gear 220, to the nacelle 160. In other words, the target bolt connects the gear mechanism 200, which is constituted by the pinion gear 220 and the ring gear 210, to the nacelle 160. A plurality of such target bolts are arranged in the circumferential direction around the yaw axis Y, in accordance with the positions of the driving units 50. The strain sensor 21 is provided for each of these target bolts.

As shown in Figs. 2 and 5, the wind power generation device 100 includes a wind speed sensor 22 as a speed sensor for sensing the speed of wind passing the nacelle 160. The wind speed sensor 22 is installed on the top surface of the nacelle 160. The wind speed sensor 22 senses the speed of the wind passing the top surface of the nacelle 160 as a passing wind speed V. The passing wind speed V sensed by the wind speed sensor 22 reflects the speed of the wind passing the blades 150. The wind speed sensor 22 repeatedly outputs its own sensing values to the control unit 500 described later.

As shown in Figs. 2 and 5, the wind power generation device 100 includes a wind direction sensor 23. The wind direction sensor 23 is installed on the top surface of the nacelle 160. The wind direction sensor 23 senses the direction W of the wind passing the top surface of the nacelle 160. The wind direction sensor 23 repeatedly outputs its own sensing values to the control unit 500 described later.

### <Control Unit>

As shown in Figs. 2 and 5, the wind power generation device 100 includes a control unit 500. The control unit 500 is located inside the nacelle 160. As shown in Fig. 5, the control unit 500 includes a processing circuit 501. Although not shown, the control unit 500 also includes a communicator for communicating with the outside in a wireless or wired manner and a communication port for obtaining information from various sensors. The control unit 500, together with the strain sensors 21, the wind speed sensor 22, and the wind direction sensor 23, constitutes a controller 600.

The processing circuit 501 includes a CPU 510 and a memory 520. The memory 520 includes three types of storage media: RAM, ROM, and electrically rewritable nonvolatile memory. In this embodiment, these three types of storage media are collectively referred to as the memory 520. The memory 520 stores in advance various control programs N1 for the wind power generation device 100 that describe the processes to be executed by the CPU 510, and various reference data N2 that are necessary for the CPU 510 to execute the control programs N1.

The CPU 510 controls various parts of the wind power generation device 100. For example, the CPU 510 controls the power generator 170, and the motor 60 of each drive unit 50, each electromagnetic brake 310, and the friction brake 350.

### <Basic Control>

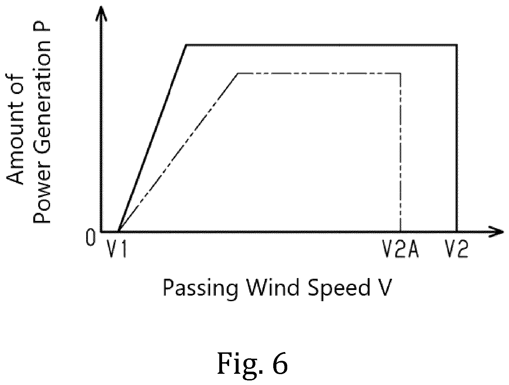

The CPU 510 is basically in constant operation, except during maintenance by workers. The CPU 510 continues to perform basic control during its own operation. The basic control is the control related to power generation by the power generator 170. In the basic control, the CPU 510 repeatedly obtains the latest sensing value from the wind speed sensor 22. In other words, the CPU 510 repeatedly obtains the latest passing wind speed V The CPU 510 controls the power generator 170 into operating state if the power generation condition is satisfied. As shown in Fig. 6, the power generation condition is that the passing wind speed V is greater than or equal to the lower permission limit V1 and less than or equal to the upper permission limit V2. The lower permission limit V1 is preset, taking into account factors such as the minimum wind speed at which the blades 150 can be rotated. The upper permission limit V2 is preset, taking into account factors such as the load on each device located in the power transmission path from the power generator 170 to the blades 150. As shown by the solid line in Fig. 6, the CPU 510 controls the power generator 170 so that it basically generates a constant amount of power P during its operation, except when the passing wind speed V is low. The memory 520 stores the lower permission limit V1 and the upper permission limit V2 in advance. The lower permission limit V1 and the upper permission limit V2 are a type of reference data N2.

### <Braking Control>

The CPU 510 repeatedly performs the braking control while the power generator 170 is operating. The braking control is control for braking the rotation of the nacelle 160 relative to the tower 110. The following describes a series of steps performed by the CPU 510 in the braking control.

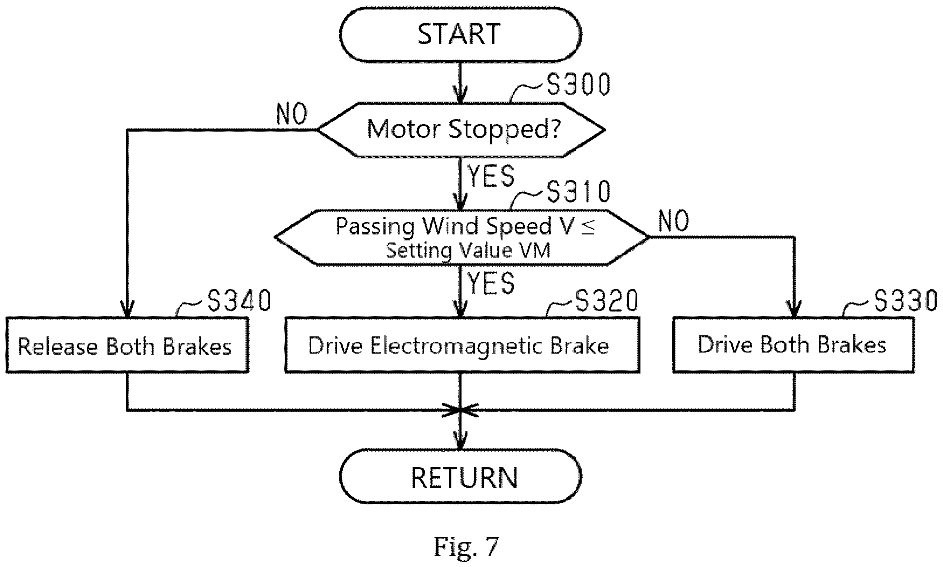

As shown in Fig. 7, when the CPU 510 starts the braking control, it first performs the process of step S300. In step S300, the CPU 510 determines whether the motor 60 is stopped in relation to the driving control described later. If the motor 60 is stopped (step S300: YES), the CPU 510 proceeds to step S310.

In step S310, the CPU 510 determines whether the latest passing wind speed V is less than or equal to the setting value VM. The memory 520 stores the setting value VM in advance. The setting value VM is a type of reference data N2. The setting value VM is preset, for example, by experiment or simulation, as the maximum value of the passing wind speed V that can hold the nacelle 160 at the current rotational position with only the electromagnetic brake 310, not both the electromagnetic brake 310 and the friction brake 350. In making the determination in step S310, the CPU 510 first obtains the latest passing wind speed V sensed by the wind speed sensor 22. In effect, the CPU 510 refers to the latest value of the passing wind speed V, which is repeatedly obtained in the basic control. When the CPU 510 obtains the latest passing wind speed V, it compares this passing wind speed V with the setting value VM. If the latest passing wind speed V is less than or equal to the setting value VM (step S310: YES), the CPU 510 proceeds to step S320.

In step S320, the CPU 510 puts the electromagnetic brake 310 into the driving state. Specifically, the CPU 510 controls the relay 325 so that the braking force produced by electromagnetic brake 310 acts on the motor 60. In this embodiment, the CPU 510 turns off the relay 325. Once the CPU 510 puts the electromagnetic brake 310 into the driving state, the CPU 510 ends the process of step S320 while maintaining the driving state. The processing time required for the CPU 510 to perform step S320 is less than one second, for example. The same applies to steps S330 and S340 described later. With respect to the processing of step S320, it is possible that the CPU 510 has already put the electromagnetic brake 310 in the driving state at the time the CPU 510 proceeds to step S320, in relation to the processing of the braking control in the previous cycle. In this case, the CPU 510 maintains the driving state of the electromagnetic brake 310 in step S320. When the CPU 510 ends the process of step S320, it temporarily ends the series of processes of the braking control. The CPU 510 then immediately starts the next cycle of the braking control. Specifically, the CPU 510 performs the process of step S300.

On the other hand, in step S310, if the latest passing wind speed V is greater than the setting value VM (step S310: NO), the CPU 510 proceeds to step S330. In this case, the CPU 510 puts both the electromagnetic brake 310 and the friction brake 350 into the driving state. The process for putting the electromagnetic brake 310 into the driving state is the same as that described for step S320. For the friction brake 350, the CPU 510 controls the hydraulic pressure supply mechanism 360 so that the braking force produced by the friction brake 350 acts on the tower 110 and the nacelle 160. As in step S320, if both the electromagnetic brake 310 and the friction brake 350 are already being driven at the time the CPU 510 proceeds to step S330, the CPU 510 maintains this state. Once the CPU 510 puts both the electromagnetic brake 310 and the friction brake 350 into the driving state, the CPU 510 ends the process of step S330 while maintaining the driving state. The CPU 510 temporarily ends the series of processes of the braking control. The CPU 510 then immediately starts the next cycle of the braking control. Specifically, the CPU 510 performs the process of step S300.

In step S300, if the motor 60 is being driven (step S300: NO), the CPU 510 proceeds to step S340. In step S340, the CPU 510 puts both the electromagnetic brake 310 and the friction brake 350 into the non-driving state. Specifically, the CPU 510 controls the relay 325 so that the braking force of the electromagnetic brake 310 acting on the motor 60 is released. In this embodiment, the CPU 510 turns on the relay 325. The CPU 510 also controls the hydraulic pressure supply mechanism 360 so that the braking force of the friction brake 350 acting on the tower 110 and the nacelle 160 is released. If both the electromagnetic brake 310 and the friction brake 350 are in the non-driving state at the time the CPU 510 proceeds to step S340, the CPU 510 maintains this state. Once the CPU 510 puts both the electromagnetic brake 310 and the friction brake 350 into the non-driving state, the CPU 510 ends the process of step S340 while maintaining this state. The CPU 510 temporarily ends the series of processes of the braking control. The CPU 510 then immediately starts the next cycle of the braking control. Specifically, the CPU 510 performs the process of step S300.

With respect to the above braking control, the process in which the CPU 510 maintains the driving state of the electromagnetic brake 310 by repeating the process of step S320, and the process in which the CPU 510 maintains the driving state of both the electromagnetic brake 310 and the friction brake 350 by repeating the process of step S330 are the braking processes. In other words, in the braking processes, the CPU 510 drives at least one of the electromagnetic brake 310 and the friction brake 350 to brake the rotation of the nacelle 160 relative to the tower 110. In the following, when the electromagnetic brake 310 and the friction brake 350 are mentioned collectively, they are referred to simply as the brake.

### <Driving Control>

The CPU 510 repeatedly performs the driving control while the power generator 170 is operating. The driving control is control for driving the rotation of the nacelle 160 relative to the tower 110. The following describes a series of steps performed by the CPU 510 in the driving control. The CPU 510 has stopped the supply of power to the motor 60 at the time the power generator 170 starts operating. Thus, at the time the CPU 510 starts operation of the power generator 170, the motor 60 has been stopped.

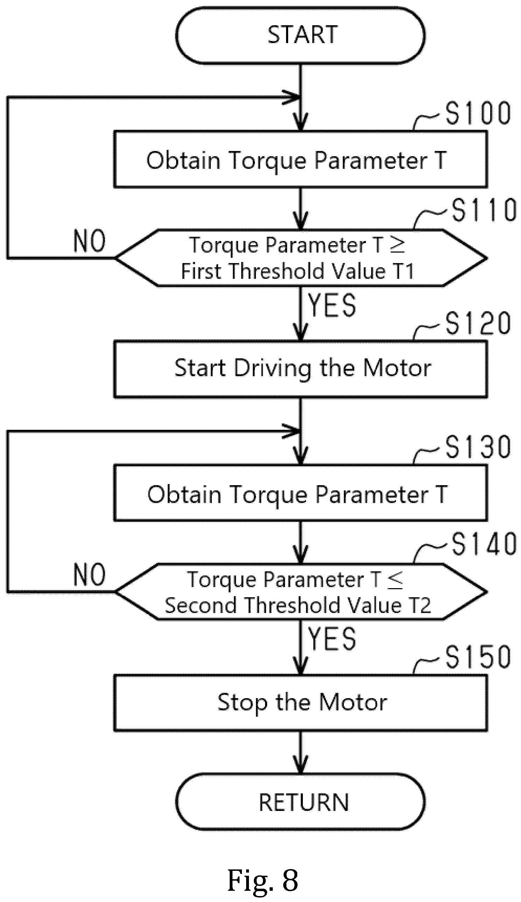

As shown in Fig. 8, when the CPU 510 starts the driving control, it first performs the process of step S100. In step S100, the CPU 510 obtains a torque parameter T. The torque parameter T is a parameter that is positively correlated to a load torque HT. The load torque HT will be described later in the section on the operation of the embodiment. In obtaining the torque parameter T, the CPU 510 first obtains the latest sensing value from each of the plurality of strain sensors 21. Specifically, the CPU 510 obtains the latest value of the strain H of the bolt 32 from each of the plurality of strain sensors 21. The CPU 510 then calculates the average of the values obtained. The CPU 510 handles the average value obtained as the torque parameter T. The calculation of the average value is an example of a statistical process. Once the CPU 510 obtains the torque parameter T, it proceeds to step S110. The step S100 is referred to as the obtaining process. Specifically, in the obtaining process, the CPU 510 obtains the sensing values of the strain sensors 21 and obtains the torque parameter T based on the sensing values.

In step S110, the CPU 510 determines whether or not the torque parameter T obtained in step S100 is greater than or equal to the first threshold value T1. The memory 520 stores the first threshold value T1 in advance. The first threshold value T1 is a type of reference data N2. The first threshold value T1 will be described later in the section on the operation of the embodiment. If the torque parameter T obtained in step S100 is less than the first threshold value T1 (step S110: NO), the CPU 510 returns to the process of step S100. On the other hand, if the torque parameter T is equal to or greater than the first threshold value T1 (step S110: YES), the CPU 510 proceeds to step S120. In connection with the braking control described above, the CPU 510 controls the brake in the driving state while it performs steps S110 and S120.

In step S120, the CPU 510 starts driving the motor 60 in each drive unit 50. Specifically, the CPU 510 starts supplying power to each motor 60, thereby starting the rotational drive of the output shaft 68 of each motor 60. In driving each motor 60, the CPU 510 essentially controls the inverter 69 for each motor 60. When the CPU 510 starts driving each motor 60, the nacelle 160 starts to rotate relative to the tower 110. Once the CPU 510 starts driving each motor 60, it proceeds to step S130. In connection with the braking control described above, the CPU 510 controls the brake in the non-driving state from this point on until the process of step S150 is ended.

In step S130, the CPU 510 performs the obtaining process described for step S100. Specifically, in step S130, the CPU 510 obtains the torque parameter T again. The CPU 510 then proceeds to step S140.

In step S140, the CPU 510 determines whether or not the torque parameter T obtained in step S130 is less than or equal to the second threshold value T2. The memory 520 stores the second threshold value T2 in advance. The second threshold value T2 is a type of reference data N2. The second threshold value T2 is preset to be smaller than the first threshold value T1. The second threshold value T2 will be described later in the section on the operation of the embodiment. If the torque parameter T obtained in step S130 is greater than the second threshold value T2 (step S140: NO), the CPU 510 returns to the process of step S130. On the other hand, if the torque parameter T obtained in step S130 is equal to or less than the second threshold value T2 (step S140: YES), the CPU 510 proceeds to step S150.

In step S150, the CPU 510 stops the motor 60 of each drive unit 50. Specifically, the CPU 510 stops the supply of power to each motor 60 to stop the rotation of the output shaft 68 in each motor 60. The CPU 510 then ends the process of step S150. Simultaneously, the CPU 510 temporarily ends the series of processes related to driving control. The CPU 510 then immediately starts the next cycle of the driving control. Specifically, the CPU 510 starts the process of step S100. The series of processes from the time the CPU 510 determines that step S110 results in YES to the end of step S150 constitute the driving process.

The CPU 510 can rotate the output shaft 68 of the motor 60 in both forward and reverse directions. In the driving process mentioned above, the CPU 510 performs the following process in a strict description. Specifically, in step S120, the CPU 510 rotates the output shaft 68 of the motor 60 in the preset first rotational direction. If the torque parameter T does not decrease after a while after starting to drive the motor 60, the CPU 510 reverses the rotational direction of the output shaft 68. The CPU 510 then continues to drive the motor 60 until the torque parameter T falls to or below the second threshold value T2, as described above. The CPU 510 can also set the rotational direction of the output shaft 68 of the motor 60 based on the sensing value of the wind direction sensor 23.

### <Operation 1 of Embodiment: Overall Flow of Process Performed by CPU>

The CPU 510 interrelates the braking control and the driving control while the power generator 170 is in operation. The following is a general description of the overall flow of the process performed by the CPU 510 in relation to the braking control and the driving control.

Suppose that the CPU 510 is now not driving the motor 60 (step S300: YES) and is driving the brake (step S320 or step S330). In other words, the CPU 510 has stopped the rotation of the nacelle 160. The CPU 510 monitors the transition of the torque parameter T by repeating the calculation of the torque parameter T while the brake is being driven (step S100, step S110: NO). When the torque parameter T rises to or above the first threshold value T1 (step S110: YES), the CPU 510 releases the brake (step S340). On the other hand, when the torque parameter T rises to or above the first threshold value T1, the CPU 510 drives the motor 60 (step S120) to rotate the nacelle 160 relative to the tower 110 until the torque parameter T falls to or below the second threshold value T2. In other words, the CPU 510 performs the driving process. When the torque parameter T falls to or below the second threshold value T2 (step S140: YES), the CPU 510 stops the motor 60 (step S150). Simultaneously, the CPU 510 drives the brake to hold the current rotational position of the nacelle 160 (step S320 or step S330). In other words, the CPU 510 performs the braking process. In holding the nacelle 160 at the current rotational position, if the passing wind speed V is low (step S310: YES), the CPU 510 puts only the electromagnetic brake 310 into the driving state (step S320). On the other hand, if the passing wind speed V is high (step S310: NO), the CPU 510 puts both the electromagnetic brake 310 and the friction brake 350 into the driving state (step S330).

Suppose that the wind direction changes while the CPU 510 holds the rotational position of the nacelle 160 with the brake in the driving state. Then the torque parameter T rises for the reason described later. When the torque parameter T rises to or above the first threshold value T1 (step S110: YES), the CPU 510 drives the motor 60 again and releases the brake. The CPU 510 rotates the nacelle 160 until the torque parameter T falls to or below the second threshold value T2 (step S140: YES). The CPU 510 then drives the brake to hold the nacelle 160 at the position after the rotation.

Thus, the CPU 510 alternately repeats the driving process and the braking process while the power generator 170 is in operation. In addition, the CPU 510 selects the brake to be used in the braking process according to the passing wind speed V.

### <Operation 2 of Embodiment: Sensing Value of Strain Sensor>

A detailed description is given of the relationship between the strain H in the bolt 32 detected by the strain sensor 21 and the direction of the wind acting on the blades 150. The premise is as follows. As shown in Fig. 2, a first direction D1 refers to, among the radial directions around the yaw axis Y, the direction along the roll axis R (i.e., along the roll axis R in the plane perpendicular to the yaw axis Y) and toward the blades 150 from the opposite side to the nacelle 160 across the hub 140. A second direction D2 refers to, among the radial directions around the yaw axis Y, the direction of the wind relative to the blades 150 (i.e., the direction of the wind relative to the blade 150 in the plane perpendicular to the yaw axis Y). In addition, a misalignment angle DA refers to the acute angle formed by the first direction D1 and the second direction D2.

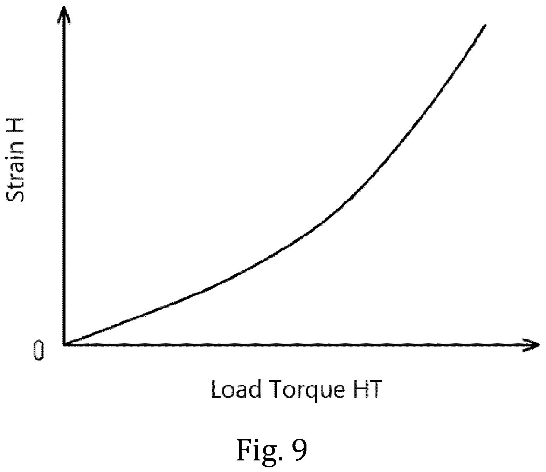

Suppose that the CPU 510 is now not driving the motor 60 and is holding the nacelle 160 at a certain rotational position by the electromagnetic brake 310. In addition, suppose that the wind direction changes under these circumstances and the misalignment angle DA increases. If the misalignment angle DA is zero, then a force in the direction coinciding with the roll axis R, i.e., orthogonal to the blades 150, acts on the blades 150 as a whole. On the other hand, if the misalignment angle DA is large, a force acts on the blades 150 in a direction intersecting the roll axis R, i.e., not orthogonal to the blades 150. The blades 150 are pushed by the wind so that the misalignment angle DA increases. Specifically, as indicated by the arrow B in Fig. 2, the blades 150 receive a force that will rotate the blades 150 in the circumferential direction around the yaw axis Y. This force acts on the nacelle 160, which is connected to the blades 150. Thus, the nacelle 160 will rotate in the circumferential direction around the yaw axis Y. As shown in Fig. 4, the force acting on the nacelle 160 is transmitted to the second case 72 via the bolts 32 connecting the nacelle 160 and the drive unit 50. If the pinion gear 220 is rotatable at this time, the pinion gear 220 will rotate relative to the ring gear 210 in response to the force from the nacelle 160. However, the pinion gear 220 is actually not rotatable because the electromagnetic brake 310 brakes the rotation of the output shaft 68 of the motor 60 and thus the rotation of the pinion gear 220. Therefore, a load is applied to the bolts 32 that connect the nacelle 160, which will rotate, and the drive unit 50, which will prevent the nacelle 160 from rotating. The bolts 32 are thus strained. The strain sensor 21 detects the strain H in such a bolt 32. Specifically, the sensing value obtained by the strain sensor 21 reflects the load torque HT, which is the torque acting on the pinion gear 220 from the nacelle 160 when the nacelle 160 is held at a certain position by the electromagnetic brake 310. Therefore, the sensing value of the strain sensor 21 is information related to the load torque HT. In addition, as shown in Fig. 9, the sensing value of the strain sensor 21 is positively correlated to the load torque HT. Fig. 9 shows an example of the correspondence between the load torque HT and the strain H in the bolt 32 calculated, for example, by experiment or simulation. Because of the relationship between the load torque HT and the sensing value of the strain sensor 21 described above, the torque parameter T, which is the average of the sensing values of the plurality of strain sensors 21, is positively correlated to the load torque HT.

Based on the above-mentioned correspondence between the torque parameter T and the misalignment angle DA, the process that the CPU 510 performs in the driving control and the braking control will be described again. In the driving control, the CPU 510 drives the motor 60 when the torque parameter T increases, i.e., when the misalignment angle DA increases. The CPU 510 thereby rotates the nacelle 160 relative to the tower 110. Accordingly, the CPU 510 gradually decreases the misalignment angle DA toward zero. The CPU 510 stops the rotation of the nacelle 160 when the torque parameter T is decreased sufficiently, i.e., when the misalignment angle DA is decreased sufficiently. At the position at which the CPU 510 has stopped the rotation of the nacelle 160, i.e., at which the misalignment angle DA is small, the blades 150 can receive wind from almost directly in front of them. In the braking control, the CPU 510 brakes the rotation of the nacelle 160 at such a position at which the blades 150 can receive wind from almost directly in front of them.

### <Operation 3 of Embodiment: First Threshold Value and Second Threshold Value>

The first threshold value T1 for driving control is now described. The first threshold value T1 is preset, for example, as follows. A blade circle refers to the virtual circle formed by the rotation locus of the outer edges of the blades 150 when the blades 150 rotate around the roll axis R. A first area refers to the projected area of the blade circle obtained when the blades 150 are viewed in plan view from the first direction D1 described for Fig. 2. A second area refers to the projected area of the blade circle when the blades 150 are viewed in plan view from the second direction D2 described for Fig. 2. A limit angle refers to the misalignment angle DA occurring when the second area is 90% of the first area. The first threshold value T1 is preset, for example, by experiment or simulation, as the strain H in the bolt 32 that indicates that the misalignment angle DA is larger than the limit angle. Thus, the first threshold value T1 is set to a value that allows high power generation efficiency to be maintained. A high power generation efficiency means that a higher amount of power P is generated under the same environmental conditions and the same operating conditions of the power generator 170.

The second threshold value T2 for driving control is now described. The second threshold value T2 is preset, for example, by experiment or simulation, as the strain H in the bolt 32 that indicates that the misalignment angle DA is substantially zero.

### <Operation 4 of Embodiment: Brakes Used in Braking Process>

As mentioned above, the CPU 510 changes the brake to be used in the braking process according to the passing wind speed V. The following is the reason for this operation. The premise is that the braking force of the friction brake 350 is considerably larger than that of the electromagnetic brake 310. In addition, the friction brake 350 brakes the movement of the nacelle 160 itself. Therefore, if the friction brake 350 is driven when the passing wind speed V is low, the nacelle 160 will not move almost completely even at a large misalignment angle DA. Therefore, even at a large misalignment angle DA, no strain H is generated in the bolt 32, and the torque parameter T remains substantially zero (step S110: NO). In this case, the CPU 510 does not drive the rotation of the motor 60 and thus the nacelle 160 due to the settings for the driving control, and therefore, the misalignment angle DA remains large. To avoid such a situation, the CPU 510 uses only the electromagnetic brake 310 to hold the rotational position of the nacelle 160 when the passing wind speed V is low. If only the electromagnetic brake 310 is driven, a strain H is generated in the bolt 32 according to the misalignment angle DA. Thus, the CPU 510 can adjust the rotational position of the nacelle 160 according to the misalignment angle DA. If the passing wind speed V is low, the CPU 510 can hold the rotational position of the nacelle 160 only with the braking force of the electromagnetic brake 310.

When the passing wind speed V is high, it is difficult to hold the current rotational position of the nacelle 160 with only the electromagnetic brake 310. Therefore, when the passing wind speed V is high, the CPU 510 uses both the electromagnetic brake 310 and the friction brake 350 to hold the rotational position of the nacelle 160. When the passing wind speed V is high, the friction brake 350 alone cannot withstand the force of the nacelle 160 for rotation. Therefore, when the passing wind speed V is high, a strain H is generated in the bolt 32 according to the misalignment angle DA, even when both the electromagnetic brake 310 and the friction brake 350 are used. The torque parameter T increases accordingly. Therefore, when the passing wind speed V is high, the rotational position of the nacelle 160 can be adjusted according to the misalignment angle DA even if both the electromagnetic brake 310 and the friction brake 350 are used.

### <Advantageous Effects of Embodiment>

(1) As described above, when the torque parameter T is large, i.e., when the misalignment angle DA is large, the CPU 510 rotates the nacelle 160 until the torque parameter T is sufficiently small. Therefore, the CPU 510 can promptly reduce the misalignment angle DA in accordance with the direction of wind received by the blades 150 at each timing.

The sensing value of the wind direction sensor 23 can be used for indication of the misalignment angle DA. However, the following problem occurs when using the sensing value of the wind direction sensor 23. The wind sensor 23 is located downwind of the blades 150. Therefore, the wind reaching the wind direction sensor 23 may have been turbulent or redirected as it passes the blades 150. As a result, the sensing value of the wind direction sensor 23 can differ from the actual direction of the wind received by the blades 150. Therefore, it is difficult to grasp the misalignment angle DA in real time using the sensing value of the wind direction sensor 23. In order to eliminate the impact of instantaneous fluctuations in the wind direction included in the sensing value of the wind direction sensor 23, it is possible to refer to an average value of the sensing values of the wind direction sensor 23 over a certain long predetermined time period, such as ten minutes, for example. However, referring to such an average value over a predetermined period of time does not make it possible to grasp the instantaneous misalignment angle DA at each timing. In addition, if the rotational position of the nacelle 160 is adjusted every predetermined time period based on such average values, the misalignment angle DA will increase during the predetermined time period and the amount of power generation P will remain low during the predetermined time period.

In contrast, the CPU 510 in this embodiment can grasp the load torque HT and thus the misalignment angle DA in real time by using the sensing value of the strain sensor 21. Thus, the CPU 510 can rotate the nacelle 160 to the optimal rotational position for power generation at each timing. The blades 150 are almost constantly able to receive wind from almost directly in front of them. In this case, as shown by the solid line in Fig. 6, compared to the case where the rotational position of the nacelle 160 is adjusted at predetermined intervals based on the averaged sensing values of the wind direction sensor 23 over a predetermined period (as indicated by the two-dot chain line in Fig. 6), the amount of generated power P is larger under the same conditions of the passing wind speed V. Thus, in this embodiment, the efficiency of power generation by the wind power generation device 100 is higher.

Furthermore, in this embodiment, the following is possible in relation to the upper permission limit V2 for power generation conditions. Supposing that the rotation of the nacelle 160 is controlled based on the values sensed by the wind direction sensor 23 averaged over a predetermined time period, the upper permission value V2A needs to be set to a value anticipating that the misalignment angle DA may increase within the predetermined time period. Specifically, when the amount of power P generated by the power generator 170 is anticipated to decrease due to the larger misalignment angle DA in a predetermined time period, it is necessary to set the upper permission limit V2A to a lower value in order to balance the cost effectiveness against the power consumption for the operation of the power generator 170 and the loads imparted on the components. In this case, the range of the passing wind speed V in which the power generator 170 can operate is reduced. By contrast, in this embodiment, where the rotational position of the nacelle 160 can be adjusted according to the real-time misalignment angle DA, the upper permission limit V2 can be set to the maximum permitted value, since no reduction in the amount of power generation P occurs for any passing wind speed V. Accordingly, the range of the passing wind speed V in which the power generator 170 can be operated is expanded. Therefore, this embodiment can ensure a larger amount of power generation P under the same environmental conditions.

(2) The CPU 510 of this embodiment uses the sensing value of the strain sensor 21 as an indicator of the load torque HT. It is also possible that, for example, the amount of rotation of the output shaft 68 or the drive shaft 80 of the motor 60 be used as an indicator of the load torque HT. However, the amount of rotation of the output shaft 68 or the drive shaft 80 related to the load torque HT is extremely small. Even if an attempt is made to correlate the information on a very small amount of rotation with the load torque HT, it is difficult to accurately grasp the relationship between the amount of rotation and the load torque HT. In contrast, the sensing value of the strain sensor 21 directly reflects the load torque HT. Therefore, the CPU 510 of this embodiment, which uses the sensing value of the strain sensor 21 as an indicator of the load torque HT, can grasp the misalignment angle DA with the same degree of accuracy as actually sensing the load torque HT itself, to rotate the nacelle 160.

(3) In this embodiment, the plurality of drive units 50 are located at different positions in the circumferential direction around the yaw axis Y. Due to the difference between the positions of the drive units 50, the magnitude of the load torque HT acting from the nacelle 160 to the gear mechanism 200 may be somewhat different depending on the positions of the drive units 50. Accordingly, errors may occur in the sensing values of the plurality of strain sensors 21. It is also possible that errors occur in the sensing values of the plurality of strain sensors 21 due to individual differences of the strain sensors 21. To address these points, the CPU 510 of this embodiment calculates the average value of the sensing values of the plurality of strain sensors 21 as the torque parameter T. Averaging the sensing values of the plurality of strain sensors 21 will probably cancel out the errors mentioned above. The CPU 510 in this embodiment, which uses such an average value, can adjust the rotational position of the nacelle 160 more appropriately in terms of increasing the efficiency of power generation.

(4) The CPU 510 of this embodiment changes the brake to be used according to the magnitude of the passing wind speed V. This allows the CPU 510 to rotate the nacelle 160 to the optimal position for power generation and to hold the nacelle 160 at this rotational position, regardless of the magnitude of the passing wind speed V, as described above in the section of Operation 4 of Embodiment.

### <Modification Examples>

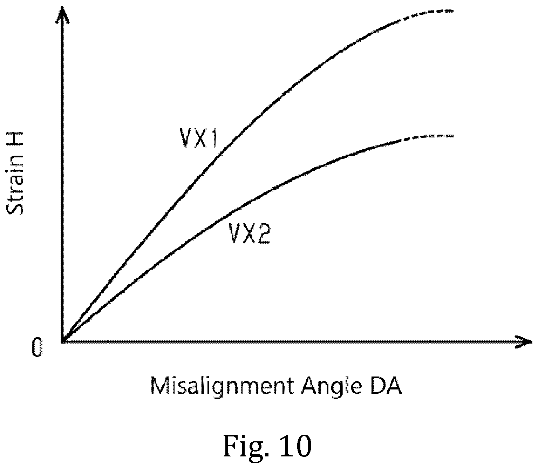

The foregoing embodiment can be modified as described below. The above embodiment and the following modifications can be implemented in combination to the extent where they are technically consistent to each other.
- The torque parameter T to be obtained in the obtaining process is not limited to the examples in the above embodiment. The torque parameter T can be any parameter that is positively correlated to the load torque HT. In other words, the torque parameter T can be any parameter that increases as the load torque HT increases. For example, the load torque HT itself may be obtained as the torque parameter T. In this case, information expressing the correspondence between the strain H in the bolt 32 and the load torque HT can be stored in the memory 520 in advance as the reference data N2. Based on this information, the CPU 510 can obtain the load torque HT according to the sensing value of the strain sensor 21. In the case where the torque parameter T is changed from the examples in the above embodiment, the first and second threshold values T1 and T2 should be changed to match the substituted physical quantity.
- The misalignment angle DA may be used as the torque parameter T. In this case, the process performed by the CPU 510 for the driving control may include the following. When using the misalignment angle DA as the torque parameter T, the premise is that the following correspondence information is stored in the memory 520 in advance. The correspondence information expresses the correspondence among the strain H in the bolt 32, the passing wind speed V, and the misalignment angle DA. The correspondence information is a type of reference data N2. As shown in Fig. 10, the correspondence information expresses the correspondence between the misalignment angle DA and the strain H in the bolt 32 for different passing wind speeds V. The example in Fig. 10 shows the relationship between the misalignment angle DA and the strain H in the bolt 32 for the first wind speed VX1 and the second wind speed VX2 as representative of the correspondences for different passing wind speeds V. The first wind speed VX1 is higher than the second wind speed VX2. As shown in Fig. 10, for the same passing wind speed V, a larger misalignment angle DA results in a larger strain H in the bolt 32. Also, for the same misalignment angle DA, a higher passing wind speed V results in a larger strain H in the bolt 32. Such correspondence information is created, for example, based on experiments or simulations. The correspondence information may use the load torque HT, instead of the strain H in the bolt 32, for association with the misalignment angle DA and the passing wind speed V.

In the obtaining process of step S100 and step S130 of the driving control shown in Fig. 8, the CPU 510 obtains the misalignment angle DA as the torque parameter T in the following manner. First, the CPU 510 obtains the latest sensing value from each of the plurality of strain sensors 21. The CPU 510 then calculates the average value of the obtained sensing values as the average strain. The CPU 510 also obtains the latest sensing value from the wind speed sensor 22. Subsequently, based on the correspondence information, the CPU 510 obtains the misalignment angle DA corresponding to the average strain and the latest passing wind speed V as the misalignment angle DA for the current situation. In other words, the CPU 510 obtains the misalignment angle DA based on the average strain obtained by statistical processing of the sensing values of the plurality of strain sensors 21. In the driving control, the CPU 510 performs the determination in step S110 and step S140 based on the torque parameter T thus obtained. If the determination in step S110 results in YES, the CPU 510 then drives the motor 60 in step S120. If the determination in step S140 results in YES, the CPU 510 then stops the motor 60 in step S150. As mentioned above, in the case where the misalignment angle DA is used as the torque parameter T, the first threshold value T1 and the second threshold value T2 should be changed accordingly.

In the case where the misalignment angle DA is used as the torque parameter T, the CPU 510 can drive the motor 60 based on the misalignment angle DA itself. Therefore, the CPU 510 can adjust the rotational position of the nacelle 160 more directly to eliminate the misalignment angle DA.
- The definition of the first threshold value T1 is not limited to the example in the above embodiment. The first threshold value T1 may be set as appropriate, taking into account the frequency of driving the motor 60 and the size of the allowable misalignment angle DA. The first threshold value T1 is not limited to a fixed value. The first threshold value T1 may be variable according to, for example, the passing wind speed V.
- The definition of the second threshold value T2 is not limited to the example in the above embodiment. The second threshold value T2 can be any value smaller than the first threshold value T1. Like the first threshold value T1, the second threshold value T2 is not limited to a fixed value.
- The method of statistical processing of the sensing values of the plurality of strain sensors 21 is not limited to the example in the above embodiment. For example, as a statistical process, the median, minimum, or maximum value of the sensing values of the plurality of strain sensors 21 may be extracted, or calculations may be performed taking into account the variation of the sensing values of the plurality of strain sensors 21. The statistical process may be any process capable of extracting the characteristics grasped from the sensing values of the plurality of strain sensors 21.
- In calculating the torque parameter T, it is not essential to use the sensing values of the plurality of strain sensors 21. In other words, the torque parameter T may be calculated based on the sensing value of only one strain sensor 21. If the torque parameter T is calculated based on the sensing value of only one strain sensor 21, then a plurality of strain sensors 21 do not need to be provided in the wind power generation device 100.
- The torque information sensors are not limited to the example in the above embodiment. The torque information sensor may be any sensor capable of sensing information about the load torque HT. As in the modification example described later, a current sensor that senses the electric current value of the motor 60 may be used as the torque information sensor. In the case where a sensor other than the strain sensor 21 is used as the torque information sensor, the strain sensor 21 may be eliminated from the wind power generation device 100. If the torque information sensor is changed from the example in the above embodiment, the information about the load torque HT to be obtained in the obtaining process is also changed.
- The configuration of the electromagnetic brake 310 is not limited to the example in the above embodiment. The electromagnetic brake 310 can have any configuration capable of applying a braking force to the output shaft 68 of the motor 60 using electromagnetic force. For example, the electromagnetic brake 310 may be configured to apply a braking force to the output shaft 68 when the relay 325 is turned on.
- The configuration of the friction brake 350 is not limited to the example in the above embodiment. The friction brake 350 can be any brake capable of imparting a braking force to the tower 110 and the nacelle 160 by fluid pressure to brake the relative rotation of these components. The fluid pressure is not limited to hydraulic pressure. The fluid pressure may be, for example, gas pressure.

In holding the rotational position of the nacelle 160, it is not essential to use different brakes in accordance with the passing wind speed V. For example, if the magnitude of the braking force applied by the friction brake 350 can be adjusted, the friction brake 350 may apply a braking force to the extent that the load torque HT and thus the strain H in the bolts 32 occur under the condition with a low passing wind speed V. Alternatively, if it is possible to provide the electromagnetic brake 310 with a spring having considerably high elasticity or with a considerably large electromagnetic force, the rotational position of the nacelle 160 can be held by the electromagnetic brake 310 alone when the passing wind speed V is high.
- It is not essential to use the electromagnetic brake 310 or the friction brake 350 in holding the rotational position of the nacelle 160. For example, instead of using these brakes to hold the rotational position of the nacelle 160, the rotational position of the nacelle 160 may be held by continuing to supply power to the motor 60 and applying torque to the output shaft 68 of the motor 60. With such configuration, it is also possible to eliminate one or both of the electromagnetic brake 310 and the friction brake 350 from the wind power generation device 100. In the case where the supply of power to the motor 60 is continued to hold the rotational position of the nacelle 160, the torque acting on the output shaft 68 and thus the pinion gear 220 can be grasped based on the electric current flowing in the motor 60. Therefore, a current sensor that senses the electric current flowing in the motor 60 may be provided in the wind power generation device 100, and this current sensor may be used as the torque information sensor. In this case, the current sensor senses the electric current flowing in the motor 60 as information about the load torque HT.
- The configuration of the drive unit 50 is not limited to the example in the above embodiment. The drive unit 50 may have any configuration with the motor 60 that drives the rotation of the nacelle 160 relative to the tower 110. For example, the shape of the case or the fixing structure to the nacelle 160 may be changed from the examples in the above embodiments.
- The overall configuration of the wind power generation device 100 is not limited to the example in the above embodiment. For example, the positions and number of the drive units 50 may be changed from the examples in the above embodiment. The configuration of the nacelle 160 may be changed from the example in the above embodiment. For example, the nacelle 160 may include a hollow body, a flat bottom wall located lower than the body, and an intermediate wall connecting the body to the bottom wall. In such configuration, the drive unit 50 may be mounted on the bottom wall. In this case, the drive unit 50 is exposed outside the body of the nacelle 160. The location of the control unit 500 may be changed from the example in the above embodiment. The control unit 500 may be located outside the nacelle 160, for example, inside the tower 110. The configuration of the gear mechanism 200 that connects the nacelle 160 and the tower 110 so as to be capable of relative rotation may be different from the example in the above embodiment. For example, the plurality of teeth 212 may be present on the inner surface of the ring gear 210 instead of the outer surface thereof. In addition, the drive unit 50 may be located inside the ring gear 210 in the radial direction around the yaw axis Y. It is also possible that the ring gear 210 is mounted to the nacelle 160 and the drive unit 50 is mounted to the tower 110. The gear mechanism 200 may have any configuration that allows the nacelle 160 and the tower 110 to be connected together so as to be capable of relative rotation. The wind power generation device 100 may have any configuration including the nacelle 160 capable of rotating relative to the tower 110 and including the motor 60 for driving the relative rotation. The motor 60 is not limited to an electric motor.
- The configuration of the controller 600 is not limited to the example in the above embodiment. The controller 600 may have any configuration including a sensor for sensing information about the load torque HT and the processing circuit 501 for controlling the motor 60 that rotates the nacelle 160 relative to the tower 110. If the processing of the processing circuit 501 does not include the use of the sensing value of the wind speed sensor 22, then the wind speed sensor 22 may be eliminated from the controller 600. The same applies to the wind direction sensor 23.
- The processing of the processing circuit 501 is not limited to the example in the above embodiment. As mentioned above, the braking process that uses different brakes in accordance with the passing wind speed V is not essential. Furthermore, if the motor 60 can be properly controlled without the driving process, the driving process can be eliminated. In addition, if the motor 60 can be properly controlled without obtaining the torque parameter T, the obtaining process can be eliminated. The processing circuit 501 may perform any processing for driving the motor 60 that rotates the nacelle 160 relative to the tower 110 based on the sensing value of the sensor sensing the information about the load torque HT.
- The processing circuit 501 should have any one of the following configurations (a) to (c). (a) The processing circuit 501 has one or more processors that perform various processes according to a computer program. The processors include a CPU and a memory such as a RAM or a ROM. The memory stores therein program codes or instructions configured to cause the CPU to perform processes. The memory, or a computer-readable medium, encompasses any kind of available media accessible by a general-purpose or dedicated computer.

(b) The processing circuit 501 includes one or more dedicated hardware circuits that perform various processes. The dedicated hardware circuits can be, for example, application-specific integrated circuits, i.e., ASICs or FPGAs.

(c) The processing circuit 501 includes a processor that performs part of the various processes according to a computer program and a dedicated hardware circuit that performs the rest of the various processes.

The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

According to the foregoing embodiments, a plurality of functions are distributively provided. Some or all of the functions may be integrated. Any one of the functions may be partly or entirely segmented into a plurality of functions, which are distributively provided. Regardless of whether or not the functions are integrated or distributively provided, they are acceptable as long as they are configured to attain the object of the disclosure.

## Claims

1. A controller (600) for controlling a wind power generation device (100), the wind power generation device including a tower (110) and a nacelle (160), the controller comprising:
a processing circuit (501) configured to control a motor (60) for rotating the nacelle relative to the tower; and
a torque information sensor (21) for sensing information about a torque acting from the nacelle to a gear mechanism (200), the gear mechanism connecting the tower and the nacelle so as to be capable of relative rotation,
wherein the processing circuit is configured to drive the motor based on a sensing value of the torque information sensor.

2. The controller (600) of claim 1, wherein the processing circuit (501) is further configured to:
obtain, based on the sensing value of the torque information sensor (21), a parameter positively correlated to the torque;
if the parameter is greater than or equal to a first threshold value, start driving the motor (60) to rotate the nacelle (160) relative to the tower (110); and
if the parameter is less than or equal to a second threshold value that is less than the first threshold value, stop driving the motor.

3. The controller (600) of claim 2, wherein the information about the torque is strain in a bolt (32) for connecting the nacelle (160) to the gear mechanism (200).

4. The controller (600) of claim 3,
wherein the torque information sensor (21) is a first torque information sensor among a plurality of torque information sensors, the motor (60) is a first motor among a plurality of motors, and the bolt (32) is a first bolt among a plurality of bolts,
wherein the plurality of motors are configured such that, when the nacelle (160) is connected to the gear mechanism (200), the plurality of motors are arranged in a circumferential direction around a central axis of rotation of the nacelle relative to the tower, and each of the plurality of motors is fixed to the nacelle with respective one of the plurality of bolts,
wherein each of the plurality of torque information sensors is provided for respective one of the plurality of bolts, and
wherein the processing circuit (501) is configured to obtain the parameter based on a value statistically calculated from sensing values of the plurality of torque information sensors.

5. The controller (600) of claim 2, further comprising:
a speed sensor (22) for sensing a speed of wind passing the nacelle (160),
wherein in a plane perpendicular to a central axis of rotation of the nacelle relative to the tower (110), a misalignment angle is defined as an acute angle formed by a first direction and a second direction, the first direction being a direction along a central axis of rotation of a blade (150) connected to the nacelle, the second direction being a direction of wind relative to the blade,
wherein the processing circuit (501) includes a memory (520) that stores correspondence information expressing correspondence among the information about the torque, the speed of wind, and the misalignment angle, and
wherein the processing circuit is configured to obtain the misalignment angle as the parameter based on the sensing value of the torque information sensor (21), a sensing value of the speed sensor, and the correspondence information.

6. The controller (600) of claim 2, further comprising:
a speed sensor (22) for sensing a speed of wind passing the nacelle (160), wherein the processing circuit (501) is further configured to:
alternate braking of rotation of the nacelle relative to the tower (110) with driving of the motor (60), the braking being performed by driving at least one of an electromagnetic brake (310) and a friction brake (350), the electromagnetic brake being configured to use an electromagnetic force to apply a braking force to an output shaft of the motor, the friction brake being configured to use a fluid pressure to apply a braking force to rotation of the nacelle relative to the tower;
if a sensing value of the speed sensor is less than or equal to a predetermined setting value, drive only the electromagnetic brake; and
if the sensing value of the speed sensor is greater than the setting value, drive both the electromagnetic brake and the friction brake.

7. A processing circuit (501) for controlling a wind power generation device (100), the wind power generation device including a tower (110) and a nacelle (160), the processing circuit being configured to:
obtain information about a torque acting from the nacelle to a gear mechanism (200), the gear mechanism connecting the tower and the nacelle so as to be capable of relative rotation;
obtain, based on the information, a parameter positively correlated to the torque;
if the parameter is greater than or equal to a first threshold value, start driving a motor (60) to rotate the nacelle relative to the tower; and
if the parameter is less than or equal to a second threshold value that is less than the first threshold value, stop driving the motor.

8. A method for controlling a wind power generation device (100), the wind power generation device including a tower (110) and a nacelle (160), the method comprising:
obtaining, by a processing circuit (501), information about a torque acting from the nacelle to a gear mechanism (200), the gear mechanism connecting the tower and the nacelle so as to be capable of relative rotation;
obtaining, by the processing circuit, based on the information, a parameter positively correlated to the torque;
if the parameter is greater than or equal to a first threshold value, starting, by the processing circuit, driving a motor (60) to rotate the nacelle relative to the tower; and
if the parameter is less than or equal to a second threshold value that is less than the first threshold value, stopping, by the processing circuit, driving the motor.

9. A non-transitory computer-readable medium storing a program for controlling a wind power generation device (100), the wind power generation device including a tower (110) and a nacelle (160), the program being configured to be executed by a processing circuit (501) to cause the processing circuit to:
obtain information about a torque acting from the nacelle to a gear mechanism (200), the gear mechanism connecting the tower and the nacelle so as to be capable of relative rotation;
obtain, based on the information, a parameter positively correlated to the torque;
if the parameter is greater than or equal to a first threshold value, start driving a motor (60) to rotate the nacelle relative to the tower; and
if the parameter is less than or equal to a second threshold value that is less than the first threshold value, stop driving the motor.
